# EUROPEAN PATENT SPECIFICATION

(11) **EP 0 947 479 B1**
(45) Date of publication and mention of the grant of the patent: **18.06.2003**
(21) Application number: 99105141.8
(22) Date of filing: 26.03.1999
(51) Int. Cl.: C03C 25/10, C08J 5/08

(54) **Sizing agent for glass fibers**
Schlichtemittel für Glasfasern
Agent d'apprêt pour fibres en verre

(30) Priority: 31.03.1998 JP 8659598
(43) Date of publication of application: 06.10.1999
(73) Proprietor: NITTO BOSEKI CO., LTD., Fukushima-shi, Fukushima 960-8161 (JP)
(72) Inventor: Matsunaga, Takanobu, Fukushima-shi, Fukushima 960-8157 (JP); Abe, Kazuo, Fukushima-shi, Fukushima 960-1108 (JP); Aihara, Hiroyasu, Fukushima-shi, Fukushima 960-0111 (JP)
(74) Representative: HOFFMANN - EITLE

(56) References cited:
- WO-A-97/42129
- US-A- 5 491 182
- US-A- 5 804 313
- DATABASE WPI Section Ch, Week 198745 Derwent Publications Ltd., London, GB; Class A14, AN 1987-317636 XP002124183 & JP 62 225548 A (NIPPON GLASS SENI KK), 3 October 1987 (1987-10-03)

## Description

### BACKGROUND OF THE INVENTION

### 1. Field of the Invention

The present invention relates to a sizing agent for glass fibers, a glass fiber strand to which the sizing agent is applied, and a molded article formed of a glass-fiber-reinforced thermoplastic resin. More specifically, the present invention relates to a sizing agent for glass fibers which can be applied to a variety of thermoplastic resins, a glass fiber strand which is obtained by the use of the above sizing agent and is used for the reinforcement of thermoplastic resins, and a high-quality molded article formed of a thermoplastic resin which is reinforced with the above glass fiber strand.

### 2. Prior Art

A glass-fiber-reinforced thermoplastic resin refers to a reinforcement prepared by reinforcing a thermoplastic resin such as a polyethylene resin, a polypropylene resin, a nylon resin, a polybutylene terephthalate resin or a polycarbonate resin with glass fibers having various forms. The glass fibers for the above reinforcement are used, for example, as follows. In one case, the glass fibers in the form of chopped strands are mixed with resin pellets and other component and the mixture is directly injection-molded, or in some other case, the fibers are kneaded with resin pellets under heat in an extruder, to prepare a resin compound, the resin compound is cooled and cut to obtain pellets, and then the pellets are fed to an injection molding machine. In some cases, a thermoplastic resin is impregnated with glass fiber rovings or allowed to coat on glass fiber rovings, the rovings are cut to obtain pellets, and the pellets are fed to an injection molding machine.

Glass fibers to be used for the above purpose are generally obtained by drawing molten glass through thousands of nozzles, allowing a sizing agent to apply with a known applicator using a roller applicator or a belt applicator while cooling, then, dividing glass fibers into 1 to several glass fiber bundles called strands, and then wound around a drum.

The so-produced glass fiber strands are processed, for example, into the form of rovings, roving cloth, chopped strands, a chopped strand mat or milled fibers depending upon an end use.

When glass fiber strands processed in the above various forms are incorporated into a thermoplastic resin, the sizing agent to be applied to the glass fiber strands is generally an aqueous solution containing various raw materials such as a plastic film-forming agent, a silane coupling agent, a lubricant, an antistatic agent, an antioxidant, and the like.

As the above plastic film-forming agent, a dispersion of an epoxy resin, a urethane resin or an acrylic resin is mainly used, and an epoxy resin in particular has a high effect on improving mechanical strength.

US-A-5,491,182 discloses a sizing composition for use on glass fibers which are used to reinforce lamination resins used in the formation of glass laminate. The sizing compositions contain a low molecular weight polymer latex prepared by polymerizing at least one monomer selected from a group of polymerizable and unsaturated compounds. This reference does not explicitly describe using a copolymer of an α-olefin and a glycidyl ester of an α,β-unsaturated acid in a sizing agent for glass fibers.

A sizing agent constituted of the above components has excellent properties, and at present, it is used as a sizing agent for glass fibers in many cases. However, thermoplastic resins into which the sizing-agent-applied glass fiber strands are incorporated vary widely in kind, include various kinds such as modified resins, mixtures of different resins and polymer alloys of thermoplastic resins and have a diversity of ends in use. An increasing number of thermoplastic resins have come to be used as a substitute for metals, and qualities which molded articles are required to have are becoming severe.

For the above reason, it is required to use a number of sizing agents having specific compositions depending upon ends in use and use fields. As a result, the number of times of changing sizing agents in production steps increases, and a changing loss increases. Therefore, kinds of raw materials as an inventory are caused to increase, and additional inventory control is required, which causes a cost to increase.

The big problem which is to be solved is therefore to increase kinds of resins to which one sizing agent can be applied and to decrease kinds of sizing agents. At present, however, it is very difficult to solve the above problem without downgrading the quality level which molded articles are required to have.

### SUMMARY OF THE INVENTION

Under the circumstances, it is an object of the present invention to provide a sizing agent for glass fibers, which can be applied to a variety of thermoplastic resins and is free from impairing the product quality of molded articles therefrom, a glass fiber strand prepared by using the above sizing agent, and a high-quality molded article formed of a thermoplastic resin reinforced with the above glass fiber strand.

For achieving the above object, the present inventors have made diligent studies and as a result have found that a sizing agent containing a specific copolymer can be applied to various kinds of thermoplastic resins which are used for various purposes in wide fields and that the above sizing agent does not impair product qualities of molded articles obtained from the thermoplastic resins. The present invention has been completed on the basis of the above findings.

That is, the present invention provides
(1) a sizing agent for glass fibers, which comprises a copolymer of an α-olefin and a glycidyl ester of an α,β-unsaturated acid,
(2) a glass fiber strand having 0.1 to 5.0 % by weight, as a solid content, per 100 % by weight of a glass fiber, of the sizing agent according to the above (1) applied to the glass fiber,
(3) a glass fiber chopped strand having 0.5 to 5.0 % by weight, as a solid content, per 100 % by weight of a glass fiber, of the sizing agent according to the above (1) applied thereto, and
(4) a molded article formed of a glass-fiber-reinforced thermoplastic resin containing the glass fiber chopped strand according to the above (3).

### DETAILED DESCRIPTION OF THE INVENTION

The sizing agent for glass fibers, provided by the present invention, comprises a copolymer of an α-olefin and a glycidyl ester of an α,β-unsaturated acid. Although not specially limited, the α-olefin for forming the above copolymer preferably includes α-olefins having 2 to 10 carbon atoms such as ethylene, propylene, butene-1 and 4-methylpentene. Of these, ethylene is particularly preferred. The above α-olefins may be used alone or in combination.

Although not specially limited, the glycidyl ester of an α,β-unsaturated acid for forming the above copolymer preferably includes glycidyl esters of α,β-unsaturated monocarboxylic acids such as acrylic acid, methacrylic acid and ethacrylic acid. Of these, glycidyl methacrylate is particularly preferred. The above glycidyl esters of α,β-unsaturated acids may be used alone or in combination.

In the above copolymer, the content of units of the glycidyl ester of an α,β-unsaturated acid is preferably in the range of from 1 to 30 % by weight. When the above content is less than 1 % by weight, it is difficult to obtain desired effects. When it exceeds 30 % by weight, it is difficult to produce the copolymer. In view of the effect and easiness in production, the content of units of the glycidyl ester of an α,β-unsaturated acid is preferably in the range of from 3 to 20 % by weight.

The method of producing the above copolymer is not specially limited, and a known method (e.g., the method disclosed in JP-B-3-26688) can be employed.

For example, a desired copolymer can be produced by polymerizing predetermined amounts of the α-olefin and the glycidyl ester of an α,β-unsaturated acid in the presence of a polymerization initiator under a pressure in the range of, preferably, from 500 to 3,000 kg/cm², more preferably from 700 to 2,500 kg/cm² at a temperature in the range of, preferably, from 100 to 350°C, more preferably from 150 to 250°C. In this case, a chain transfer agent may be used as required. The above polymerization initiator includes, for example, hydrogen peroxide, oxygen, organic peroxides such as diethyl peroxide, di-tert-butyl hydroperoxide, di-tert-butyl peroxide, dicumyl peroxide, tert-butylperoxybenzoate, tert-butylperoxyacetate, tert-butylperoxy-2-ethylhexanoate, tert-butylperoxypivalate, 2-ethylhexanoyl peroxide, pivalyl peroxide and diisopropylperoxycarbonate, and azo compounds such as azobisisobutyronitrile and azobis-2,2-diphenylacetonitrile.

The chain transfer agent includes, for example, paraffins such as ethane, propane, butane, heptane, hexane and pentane, cycloparaffins such as cyclohexane and methylcyclohexane, aldehydes such as formaldehyde, acetaldehyde and propionaldehyde, ketones such as acetone, methyl ethyl ketone, diethyl ketone and cyclohexanone, and aromatic hydrocarbons such as benzene, toluene and xylene.

The sizing agent for glass fibers, provided by the present invention, comprises the above copolymer of an α-olefin and a glycidyl ester of an α,β-unsaturated acid as an essential component and further contains other film-forming agent, a surface-treating agent and a lubricant as required.

In the preparation of the above sizing agent, the above copolymer of an α-olefin and a glycidyl ester of an α,β-unsaturated acid is used in the form of an emulsion prepared in the presence of a proper emulsifier.

The sizing agent of the present invention can be preferably prepared by a method in which 0.1 to 100 % by weight, as a solid content or an effective component, of an emulsion of the copolymer of an α-olefin and a glycidyl ester of an α,β-unsaturated acid, 0 to 90 % by weight, as a solid content or an effective component, of an emulsion of a film-forming agent, 0 to 5.0 % by weight, as a solid content or an effective component, of a surface-treating agent, 0 to 5.0 % by weight, as a solid content or an effective component, of a lubricant, and optional water are homogeneously mixed, although the preparation method shall not be limited to the above method. In another method, the copolymer of an α-olefin and a glycidyl ester of an α,β-unsaturated acid may be additionally added to a conventional sizing agent containing a silane-coupling agent, and further, in another method, the copolymer of an α-olefin and a glycidyl ester of an α,β-unsaturated acid may be added in place of the coupling agent.

In the sizing agent of the present invention, the film-forming agent which is used as required is not specially limited, and it can be properly selected from conventionally known agents as required. Examples of the film-forming agent include emulsions of a urethane resin, an epoxy resin and an acrylic resin, and these emulsions may be used alone or in combination.

The surface-treating agent which is used as required serves to strengthen the bonding of glass fibers and a resin. The surface-treating agent is not specially limited in kind, and it can be properly selected from conventionally known agents as required. Typical examples of the above surface-treating agent include silane-coupling agents. Examples of the silane-coupling agents include aminosilane coupling agents such as γ-aminopropyltriethoxysilane, N-β-(aminoethyl)-γ-aminopropyltrimethoxysilane, N-β-(aminoethyl)-N'-β-(aminoethyl)-γ-aminopropyltrimethoxysilane and γ-anilinopropyltrimethoxysilane, epoxysilane coupling agents such as γ-glycidoxypropyltrimethoxysilane and β-(3,4-epoxycyclohexyl)ethyltrimethoxysilane, mercaptosilanes such as γ-mercaptotrimethoxysilane, vinylsilane coupling agents such as vinyltrimethoxysilane and N-β-(N-vinylbenzyl-aminoethyl)-γ-aminopropyltrimethoxysilane, and acrylsilane coupling agents such as γ-methacryloxypropyltrimethoxy-silane. The above surface-treating agents may be used alone or in combination.

Further, the lubricant which is used as required serves to impart lubricity to glass fiber strands in order to decrease friction on machine and protect glass fiber yarns. The lubricant is not specially limited in kind, and it can be properly selected from conventionally known lubricants as required. Examples of the lubricant include animal and plant waxes such as lanolin and carnauba wax, and synthetic oils such as hardened oils prepared by hydrogenation of animal and plant oils, modified silicone oil and a condensate of a higher saturated fatty acid and a higher saturated alcohol. The above lubricants may be used alone or in combination.

The sizing agent of the present invention may further contain various additives such as a fluorescence agent and an antioxidant as required depending upon purposes and fields in use.

The sizing agent of the present invention, which is prepared as described above, is generally an emulsion containing approximately 1 to 30 % by weight, as a total solid content, of the above components.

The glass fiber strand of the present invention is a bundle of glass fiber filaments, which is prepared by applying 0.1 to 5 % by weight, preferably 0.3 to 2.5 % by weight, as a solid content, per 100 % by weight of a glass fiber, of the above sizing agent to the glass fiber filaments. The above glass fiber strand of the present invention has excellent performances; (1) Fluffing and breaking of glass fibers are prevented and the occurrence of defects caused by static electricity is prevented, so that the glass fiber strand is improved in workability when used. (2) When the glass fiber strand is used to produce an injection molded article of a glass-fiber-reinforced thermoplastic resin, the adhesion between a matrix resin and the glass fibers is improved, and the molded article is improved in mechanical strength. Further, the matrix resin and the glass fibers are chemically bonded so that the molded article is remarkably improved in properties such as water resistance, mechanical strength and heat resistance.

The method of producing the glass fiber strand of the present invention is not specially limited, and it can be selected from conventionally known methods. For example, the glass fiber strand of the present invention can be produced by applying the above sizing agent of the present invention to approximately 400 to 4,000 glass fiber filaments according to a dipping method, a spraying method or a method using a roller applicator or a belt applicator and thereby bundling the filaments.

The above glass fiber strand is processed, for example, into a form of rovings, roving cloth, chopped strands, a chopped strand mat or milled fibers depending upon an end use. In the present invention, the glass fiber strand is preferably processed into chopped strands to be used for reinforcing thermoplastic resins.

According to the present invention, further, there is provided glass fiber chopped strands having 0.1 to 5.0 % by weight, preferably 0.3 to 2.5 % by weight, as a solid content, per 100 % by weight of the glass fiber, of the above sizing agent which is applied to glass fiber.

The above chopped strands are mixed with a thermoplastic resin and the resultant mixture is injection-molded or extruded, whereby a glass-fiber-reinforced thermoplastic resin molded article can be obtained. The thermoplastic resin as a matrix resin with which the above chopped strands are mixed is not specially limited so long as it can be processed by injection molding or melt extrusion. The thermoplastic resin can be properly selected from conventionally known various thermoplastic resins depending upon fields of use. Examples of the thermoplastic resins include olefin resins such as polyethylene and polypropylene, polyamide resins such as nylon 6 and nylon 66, polyester resins such as a PET (polyethylene terephthalate) resin and a PBT (polybutylene terephthalate resin), polystyrene, an AS (acrylonitrile styrene) resin, an ABS (acrylonitrile butadiene styrene) resin, a PPS (polyphenylene sulfide) resin, a PEI (polyetherimide) resin, a PEEK (polyether ether ketone) resin and a polycarbonate resin. The above thermoplastic resins may be used alone or in combination.

The amount ratios of the above thermoplastic resin and the above chopped strands are not specially limited, and they can be properly selected depending upon purposes of molded articles to be obtained in use.

The molded article of the present invention is produced by mixing a predetermined amount of the above glass fiber chopped strands with a thermoplastic resin and injection molding or extruding the resultant mixture. In this case, there may be properly added various additives which are conventionally used for a conventional glass-fiber-reinforced thermoplastic resin molded article, and examples of the additives include a pigment, inorganic fillers such as calcium carbonate and clay and various flame retardants.

In the above molded article formed of a glass-fiber-reinforced thermoplastic resin, provided by the present invention, the content of the glass fiber chopped strands is not specially limited, and it is determined as required depending upon purposes in use, while the above content is generally in the range of from 5 to 50 % by weight, preferably 10 to 40 % by weight.

Further, the above molded article shows a high bonding strength between a matrix resin and glass fiber surfaces and has excellent mechanical strength, and it is also excellent in water resistance and heat resistance.

The present invention will be explained more in detail with reference to Examples hereinafter, while the present invention shall not be limited by these Examples.

Test pieces obtained in Examples and Comparative Examples were measured for tensile strengths in a normal state and for tensile strengths after water absorption by the following methods, and thermoplastic resin pellets containing glass fibers were measured for flowability by the following method.

### (1) Tensile strength in normal state

A test piece was measured for a tensile strength according to ASTM-D638.

### (2) Tensile strength after water absorption

A test was allowed to stand in a pressure cooker at 120°C under two atmospheric pressures for 48 hours and then measured for a tensile strength according to ASTM-D638.

### (3) Flowability of pellets

An injection molding machine equipped with a spiral flow mold was used, and a resin was measured for a flow length in the mold under predetermined conditions.

In Examples and Comparative Examples, further, weights of components other than water in sizing agents refer to amounts as effective components or solid contents.

### Example 1

### (1) Preparation of chopped strands

A sizing agent containing 1 % by weight of γ-aminopropyltriethoxysilane, 5 % by weight of an emulsion of an ethylene-glycidyl methacrylate copolymer, 0.1 % by weight of carnauba wax and 93.9 % by weight of water was applied to glass fibers having a diameter of 13 µm each, and 800 filaments of the glass fibers were bundled to form a strand. The strand was cut according to a conventional cutting method, and then the cut strands were dried to give chopped strands having a length of 3 mm.

### Preparation and evaluation of test piece

### (a) PBT resin

The chopped strands obtained in the above (1) in an amount of 30 % by weight and 70 % by weight of a PBT (polybutylene terephthalate) resin were kneaded at 260°C and pelletized, and test pieces were prepared by an injection molding method.

### (b) Nylon 6 resin

The chopped strands obtained in the above (1) in an amount of 30 % by weight and 70 % by weight of a nylon 6 resin were kneaded at 260°C and pelletized, and test pieces were prepared by an injection molding method.

### (c) Polypropylene resin

The chopped strands obtained in the above (1) in an amount of 30 % by weight and 70 % by weight of a polypropylene resin were kneaded at 240°C and pelletized, and test pieces were prepared by an injection molding method.

### (d) Mixture of polypropylene resin with maleic-acid-modified polypropylene resin

The chopped strands obtained in the above (1) in an amount of 30 % by weight, 67 % by weight of a polypropylene resin and 3 % by weight of maleic-acid-modified polypropylene resin were kneaded at 240°C and pelletized, and test pieces were prepared by an injection molding method.

Table 1 shows tensile strengths of the above test pieces in a normal state, tensile strengths thereof after the water absorption and the flowability of the pellets of each.

### Example 2

### (1) Preparation of chopped strands

A sizing agent containing 1 % by weight of γ-aminopropyltriethoxysilane, 4 % by weight of an emulsion of an ethylene-glycidyl methacrylate copolymer, 2 % by weight of an epoxy resin emulsion (epoxy equivalent about 190), 0.1 % by weight of carnauba wax and 92.9 % by weight of water was applied to glass fibers having a diameter of 13 µm each, and 800 filaments of the glass fibers were bundled to form a strand. The strand was cut according to a conventional cutting method, and then the cut strands were dried to give chopped strands having a length of 3 mm.

### (2) Preparation and evaluation of test piece

### (a) PBT resin

The chopped strands obtained in the above (1) were used, and test pieces were prepared in the same manner as in Example 1.

### (b) Nylon 6 resin

The chopped strands obtained in the above (1) were used, and test pieces were prepared in the same manner as in Example 1.

### (c) Polypropylene resin

The chopped strands obtained in the above (1) were used, and test pieces were prepared in the same manner as in Example 1.

### (d) Mixture of polypropylene resin with maleic-acid-modified polypropylene resin

The chopped strands obtained in the above (1) were used, and test pieces were prepared in the same manner as in Example 1.

Table 1 shows tensile strengths of the above test pieces in a normal state, tensile strengths thereof after the water absorption and the flowability of the pellets of each.

### Example 3

### (1) Preparation of chopped strands

A sizing agent containing 1 % by weight of γ-aminopropyltriethoxysilane, 4 % by weight of an emulsion of an ethylene-glycidyl methacrylate copolymer, 2 % by weight of a polyurethane resin emulsion (BONDIC 1310F, supplied by Dainippon Ink & Chemicals, Inc.), 0.1 % by weight of carnauba wax and 92.9 % by weight of water was applied to glass fibers having a diameter of 13 µm each, and 800 filaments of the glass fibers were bundled to form a strand. The strand was cut according to a conventional cutting method, and then the cut strands were dried to give chopped strands having a length of 3 mm.

### (2) Preparation and evaluation of test piece

### (b) Nylon 6 resin

The chopped strands obtained in the above (1) were used, and test pieces were prepared in the same manner as in Example 1.

### (c) Polypropylene resin

The chopped strands obtained in the above (1) were used, and test pieces were prepared in the same manner as in Example 1.

### (d) Mixture of polypropylene resin with maleic-acid-modified polypropylene resin

The chopped strands obtained in the above (1) were used, and test pieces were prepared in the same manner as in Example 1.

Table 1 shows tensile strengths of the above test pieces in a normal state, tensile strengths thereof after the water absorption and the flowability of the pellets of each.

### Comparative Example 1

### (1) Preparation of chopped strands

Chopped strands were prepared in the same manner as in Example 1 except that the emulsion of the ethylene-glycidyl methacrylate copolymer was replaced with 5 % by weight of an epoxy resin emulsion (epoxy equivalent 190).

### (2) Preparation and evaluation of test piece

### (a) PBT resin

The chopped strands obtained in the above (1) were used, and test pieces were prepared in the same manner as in Example 1.

### (b) Nylon 6 resin

The chopped strands obtained in the above (1) were used, and test pieces were prepared in the same manner as in Example 1.

### (c) Polypropylene resin

The chopped strands obtained in the above (1) were used, and test pieces were prepared in the same manner as in Example 1.

### (d) Mixture of polypropylene resin with maleic-acid-modified polypropylene resin

The chopped strands obtained in the above (1) were used, and test pieces were prepared in the same manner as in Example 1.

Table 1 shows tensile strengths of the above test pieces in a normal state, tensile strengths thereof after the water absorption and the flowability of the pellets of each.

### Comparative Example 2

### (1) Preparation of chopped strands

Chopped strands were prepared in the same manner as in Example 1 except that the emulsion of the ethylene-glycidyl methacrylate copolymer was replaced with 5 % by weight of a polyurethane resin emulsion (BONDIC 1310F, supplied by Dainippon Ink & Chemicals, Inc.).

### (2) Preparation and evaluation of test piece

### (b) Nylon 6 resin

The chopped strands obtained in the above (1) were used, and test pieces were prepared in the same manner as in Example 1.

### (c) Polypropylene resin

The chopped strands obtained in the above (1) were used, and test pieces were prepared in the same manner as in Example 1.

### (d) Mixture of polypropylene resin with maleic-acid-modified polypropylene resin

The chopped strands obtained in the above (1) were used, and test pieces were prepared in the same manner as in Example 1.

Table 1 shows tensile strengths of the above test pieces in a normal state, tensile strengths thereof after the water absorption and the flowability of the pellets of each.

**Table 1**

| | | | Tensile strength of test piece | | Flowability of pellets (mm) |
|---|---|---|---|---|---|
| | | | Normal state (kg/cm²) | After water absorption (kg/cm²) | |
| Example 1 | Resin | PBT | 1,450 | 700 | 300 |
| | | PA6 | 1,850 | 850 | 260 |
| | | PP | 600 | 580 | 300 |
| | | PP+MA-PP | 1,000 | 950 | 280 |
| Example 2 | Resin | PBT | 1,480 | 650 | 300 |
| | | PA6 | 1,830 | 810 | 250 |
| | | PP | 560 | 550 | 290 |
| | | PP+MA-PP | 980 | 970 | 270 |
| Example 3 | Resin | PA6 | 1,850 | 700 | 260 |
| | | PP | 580 | 540 | 290 |
| | | PP+MA-PP | 950 | 900 | 280 |
| Comparative Example 1 | Resin | PBT | 1,400 | 600 | 250 |
| | | PA6 | 1,700 | 700 | 150 |
| | | PP | 420 | 390 | 290 |
| | | PP+MA-PP | 850 | 800 | 250 |
| Comparative Example 2 | Resin | PA6 | 1,740 | 650 | 230 |
| | | PP | 470 | 400 | 290 |
| | | PP+MA-PP | 900 | 690 | 240 |
| (Notes) PBT : PBT resin (polybutylene terephthalate resin) PA6 : Nylon 6 resin PP : Polypropylene resin MA-PP: Maleic-acid-modified polypropylene resin | | | | | |

### Effect of the Invention

The sizing agent for glass fibers, provided by the present invention, comprises a copolymer of an α-olefin and a glycidyl ester of an α,β-unsaturated acid, and glass fibers to which the sizing agent is applied can be applied to various thermoplastic resins in a very broad range. A molded article formed of the above glass-fiber-reinforced thermoplastic resin has excellent mechanical strength, water resistance, etc., over any conventional molded article.

According to the present invention, therefore, sizing agents to be applied to glass fiber strands used for the reinforcement of thermoplastic resins can be remarkably decreased in kind, so that the present invention produces effect on easing a product control in the step of production and at the stage of distribution and is remarkably highly valuable in industry.

## Claims

1. A sizing agent for glass fibers, which comprises a copolymer of an α-olefin and a glycidyl ester of an α,β-unsaturated acid.

2. The sizing agent for glass fibers according to claim 1, which contains 0.1 to 100 % by weight of the copolymer based on a solid content.

3. A glass fiber strand having 0.1 to 5.0 % by weight, as a solid content, per 100 % by weight of a glass fiber, of the sizing agent of claim 1 or 2 which is applied to the glass fiber.

4. A glass fiber chopped strand having 0.5 to 5.0 % by weight, as a solid content, per 100 % by weight of a glass fiber, of the sizing agent of claim 1 or 2 which is applied to the glass fiber.

5. A molded article formed of a glass-fiber-reinforced thermoplastic resin containing the glass fiber chopped strand of claim 4.

## Patentansprüche

1. Leimungsmittel für Glasfasern, das ein Copolymer aus einem α-Olefin und einem Glycidylester einer α,β-ungesättigten Säure umfasst.

2. Leimungsmittel für Glasfasern gemäss Anspruch 1, das 0,1 bis 100 Gew.% des Copolymers auf Basis des Feststoffgehalts enthält.

3. Glasfaserstrang mit 0,1 bis 5,0 Gew.% des Leimungsmittels gemäss Anspruch 1 oder 2, das auf die Glasfaser aufgebracht ist, als Feststoffgehalt auf 100 Gew.% einer Glasfaser.

4. Geschnitzelter Glasfaserstrang mit 0,5 bis 5,0 Gew.% des Leimungsmittels gemäss Anspruch 1 oder 2, das auf die Glasfaser aufgebracht ist, als Feststoffgehalt auf 100 Gew.% einer Glasfaser.

5. Formgegenstand, der aus einem glasfaserverstärkten thermoplastischen Harz gebildet ist, das den geschnitzelten Glasfaserstrang gemäss Anspruch 4 enthält.

## Revendications

1. Agent d'encollage pour fibres de verre, qui comprend un copolymère d'une α-oléfine et d'un ester glycidylique d'un acide α,β-insaturé.

2. Agent d'encollage pour fibres de verre selon la revendication 1, qui contient 0,1 à 100 % en poids du copolymère sur la base de la teneur en matières solides.

3. Brin de fibre de verre comprenant 0,1 à 5,0 % en poids, sur la base de la teneur en matières solides, pour 100 % en poids de fibre de verre, de l'agent d'encollage selon la revendication 1 ou 2 qui est appliqué sur la fibre de verre.

4. Brin de fibre de verre découpé comprenant 0,5 à 5,0 % en poids, sur la base de la teneur en matières solides, pour 100 % en poids de fibre de verre, de l'agent d'encollage selon la revendication 1 ou 2 qui est appliqué sur la fibre de verre.

5. Article moulé formé d'une résine thermoplastique renforcée par des fibres de verre contenant le brin de fibre de verre découpé selon la revendication 4.
